# EUROPEAN PATENT SPECIFICATION

(11) **EP 4 484 260 B1**
(45) Date of publication and mention of the grant of the patent: **04.02.2026**
(21) Application number: 23182532.4
(22) Date of filing: 29.06.2023
(51) Int. Cl.: B62D 24/00, B62D 61/04, B62D 63/02

(54) **MOBILE ROBOT BRAKING**
BREMSUNG EINES MOBILEN ROBOTERS
FREINAGE DE ROBOT MOBILE

(43) Date of publication of application: 01.01.2025
(73) Proprietor: Mobile Industrial Robots A/S, 5220 Odense SØ (DK)
(72) Inventor: PEDERSEN, Mikkel Steen, 5520 Odense SØ (DK)
(74) Representative: Fish & Richardson P.C.

(56) References cited:
- WO-A1-2019/105709
- WO-A1-2023/057447

## Description

### TECHNICAL FIELD

This invention relates to mobile robots, and more particularly to designs of mobile robots with improved braking performance.

### BACKGROUND

Mobile robots are robots that are capable of moving in their surroundings. Mobile robots have become more commonplace in a variety of settings. For example, hospitals use autonomous mobile robots to move materials. Warehouses have installed mobile robotic systems to efficiently move materials from stocking shelves to order fulfillment zones. Mobile robots are also used in industrial, military and security settings.

Mobile robots can be autonomous in that they are capable of governing the performance of the programmed instructions independently. In other words, real-time control of operations by an external human or other operator is unnecessary for many actions. These autonomous operations can include defined actions that contribute directly to predefined operations (e.g., manufacturing products, transporting goods and materials, moving carts, cleaning, surveillance, disinfection, etc.) as well as actions that are responsive to unforeseen transient circumstances (e.g., identifying the position of movable obstacles and objects, including other of autonomous mobile robots, responding to alarms or safety conditions, and the like).

Whether they are autonomous or not, the drive performance and safety of mobile robots is impacted by their design. In much the same way that an automobile with a high center of gravity may be at risk for rolling over, the design of a mobile robot can impact the kinematic behavior of mobile robots-as well as the safety parameters defined based on that kinematic behavior.

WO 2019/105709 describes an automated guided vehicle comprising: a base on which at least one non-driven support wheel is mounted for supporting the base; a drive wheel arrangement having at least one drive wheel for moving the guided vehicle, said drive arrangement being mounted, in particular via at least one rotary joint, on the base at least with a translational degree of freedom in the direction of a vertical axis of the guided vehicle; and at least one drive for driving the drive wheel arrangement.

WO 2023/057447 describes a kit of parts for use with a mobile robot comprising a chassis and a drive assembly having at least one driven wheel and at least one non-driven wheel. Said kit of parts comprises a top module configured to be mounted on top of the mobile robot and to add additional weight to the mobile robot, and at least one weight redistribution module comprising a biasing member configured to redistribute load from the non-driven wheel(s) to the driven wheel(s) of the mobile robot.

### SUMMARY

Mobile robots with improved traction and braking performance are described.

In some aspects, such mobile robots include a front, a rear, a left side, and a right side, the mobile robots comprising a chassis, a drive wheel coupled to the chassis by a coupling that allows at least some vertical motion of the drive wheel relative to the chassis, a payload deck disposed over the chassis and coupled to the chassis by a coupling, and a mechanical link that links the payload deck to the coupling of the drive wheel to the chassis. The coupling between the payload deck and the chassis is rearward of the mechanical link. The mobile robot also includes a control unit configured to control performance of at least some operations by the mobile robot in accordance with instructions for performing operations as well as data relevant to the performance of those operations, wherein parameters defined in the instructions or data reflect direction of a downwardly-directed force by the mechanical link to the drive wheel during braking when the mobile robot is traveling in a forward direction.

These and other mobile robots can include one or more of the following features. The drive wheel can be coupled to the chassis by a bogie arm that is rotatable about a pivot point coupled to the chassis. The mechanical link can link the payload deck to the bogie arm. The drive wheel can be rotably coupled to the bogie arm and rotation of the bogie arm about the pivot point provides the vertical motion of the drive wheel relative to the chassis. The mechanical link can be coupled to the bogie arm at a joint that is disposed on a same side of the pivot point as the rotable coupling between the drive wheel and the bogie arm. The drive wheel can be rotably coupled to the bogie arm rearward of the pivot point. The coupling between the payload deck and the chassis can be a rotatable coupling, for example, a joint. The mobile robot can include a forward support configured to contact a surface during operational movement of the mobile robot; and a rearward support configured to contact the surface during operational movement of the mobile robot. The drive wheel can be disposed rearward of the forward support and forward of the rearward support. The forward support can be a front caster and the rearward support is a rear caster. The mobile robot can include two drive wheels. One of the drive wheels can be disposed toward the right side of the mobile robot and another of the drive wheels can be disposed toward the left side of the mobile robot.

**In** other aspects, mobile robots include a front, a rear, a left side, and a right side, such mobile robots comprising a chassis that is coupled to a forward support, a drive wheel, and a rearward support, wherein the drive wheel is disposed rearward of the forward support and forward of the rearward support and wherein the drive wheel and the forward and rearward supports are configured to bear a load arising from the weight of mobile robot and a payload borne by the mobile robot, a payload platform configured to receive a payload borne by the mobile robot, and a mechanical link arranged to preferentially direct a downwardly-directed force that arises from inertia of the payload during braking when the mobile robot is moving in the forward direction from the payload platform to the drive wheel rather than the forward and rearward supports. The mobile robot includes a control unit configured to control performance of at least some operations by the mobile robot in accordance with instructions for performing operations as well as data relevant to the performance of those operations. The parameters defined in the instructions or data reflect the preferential direction of the downwardly-directed force to the drive wheel.

These and other mobile robots can include one or more of the following features. The payload platform can be a payload deck that is disposed over the chassis and coupled to the chassis by a coupling that permits rotational movement of the payload deck, wherein the coupling is rearward of the drive wheel. The drive wheel can be coupled to the chassis by a coupling that allows at least some vertical motion of the drive wheel relative to the chassis. The drive wheel can be coupled to the chassis by a bogie arm that is rotatable about a pivot point coupled to the chassis. The drive wheel can be rotably coupled to the bogie arm and rotation of the bogie arm about the pivot point provides vertical motion of the drive wheel relative to the chassis. The mechanical link can links the payload deck to the bogie arm. The mechanical link can be coupled to the bogie arm at a joint that is disposed on a same side of the pivot point as the rotable coupling between the drive wheel and the bogie arm. The forward support can be a front caster and the rearward support is a rear caster. The mobile robot can include two drive wheels and one of the drive wheels is disposed toward the right side of the mobile robot and another of the drive wheels is disposed toward the left side of the mobile robot.

The details of one or more implementations are set forth in the accompanying drawings and the description below. Other features and advantages will be apparent from the description and drawings, and from the claims.

### DESCRIPTION OF DRAWINGS

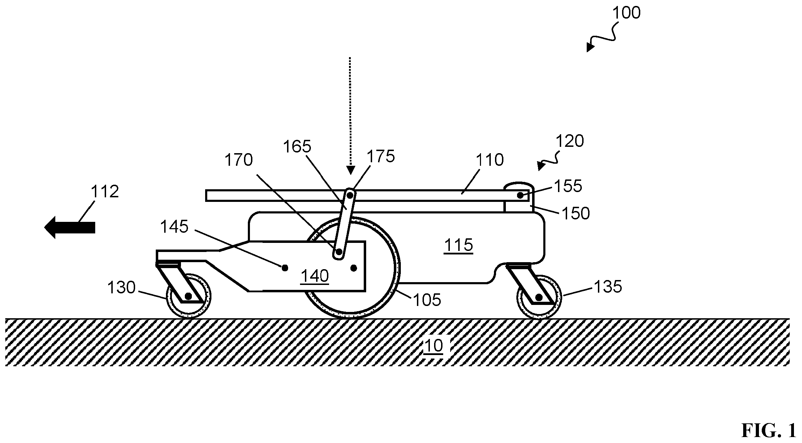

FIG. 1 is a schematic representation of a side view of a mobile robot with improved braking performance.

Like reference symbols in the various drawings indicate like elements.

### DETAILED DESCRIPTION

FIG. 1 is a schematic representation of a side view of a mobile robot 100 with improved braking performance. In particular, mobile robot 100 includes at least one drive wheel 105 and a payload deck 110 that is coupled to the chassis 115 or other frame of mobile robot 100 at a coupling 120. Coupling 120 is located rearward of drive wheel 105 in the sense that coupling 120 is behind mobile robot 100 when drive wheel 105 is driving mobile robot 100 in a forward direction. In the illustration, the forward direction is indicated by a bold, solid arrow 112 and corresponds to the direction that mobile robot 100 is most likely to travel when in operation.

In general with any mobile robot, in a static condition when the mobile robot is not moving, the static load arising from the weight of mobile robot and any payload will be borne both by drive wheel(s) and any other support(s) that are in contact with a floor or other surface. The distribution of the loads amongst the drive wheel(s) and any other support(s) will depend on several factors, including the geometry of mobile robot, the positioning of the load, the features of the floor or other surface, the positioning of the drive wheel and other supports, the nature and positioning of any intermediate members between the payload and the supports (e.g., a bogie), and the like.

When a mobile robot is moving, a drive wheel may slip. The slippage may occur, e.g., during acceleration and braking, during turning, or when the mobile robot drives up ramps, over obstacles, or the like. The precision of the control of the mobile robot is decreased. Further, in some mobile robots, the position of mobile robot during navigation is calculated using a rotary encoder or other device that measures rotation of a drive wheel and acts as an odometer. Slippage of such a drive wheel may lead to incorrect or inaccurate location and navigation information.

Increasing the traction between the drive wheel and the floor or other surface will reduce this slip. The traction between the drive wheel and the floor or other surface can be increased, e.g., by increasing the load borne by the drive wheel. Depending on details of mobile robot, increasing the load borne by the drive wheel may also increase the load borne by some of the other supports that are in contact with a floor or other surface. This may be undesirable when, e.g., the other supports are casters that should rotate freely as the mobile robot changes direction.

Turning to the illustrated mobile robot 100, during braking as mobile robot 100 travels in the forward direction, the forward inertia of a payload that is mounted on payload deck 110 will apply a downwardly-directed force to payload deck 110. By preferentially directing this downwardly-directed force to drive wheel 105, the amount of the load borne by drive wheel 105 is increased more than load(s) borne by the other supports. The contact force-and hence friction and traction- between drive wheel 105 and the floor 10 or other surface on which mobile robot 100 is traveling is increased.

Further, since characteristics of the payload (e.g., payload weight) will impact the magnitude of the increase in the downwardly-directed force at the drive wheel, the increases in friction between drive wheel 105 the floor 10 will also be impacted by the characteristics of the payload. In general, a weightier payload will lead to higher increases in friction. Braking performance is thus, to some extent, tailored to the characteristics of the payload. The improved braking performance can decrease the stopping distance for the robot.

Further, a control unit controls performance of operations by mobile robot 100 (for example, where mobile robot 100 is autonomous), the operational parameters that are defined as safe can reflect the improved braking performance during travel in the forward direction. For example, operational parameters encompassed by permitted (or "safe") envelopes can be enlarged and/or the operational parameters encompassed by excluded (or "unsafe") envelopes can be decreased.

In the illustrated implementation, mobile robot 100 is supported on floor 10 by drive wheel 105 and casters 130, 135. Casters 130, 135 are rotably coupled to mobile robot 100 by joints at the ends of the caster arms. In the illustrated orientation, casters 130, 135 can rotate about these joints around vertical axes in a plane that is parallel to the plane of the page. Drive wheel 105 and the wheels of casters 130, 135 are also mounted, on axles or otherwise, to rotate about respective axes that, in the illustrated orientation, extend into and out of the page. Drive wheel 105 is driven by a motor that is supplied by power from a supply. In many implementations of mobile robot 100, the motor is electric and the power supply is a battery. In general, drive wheel 105 will include an outer surface that is configured to generate traction on floor 10 or other surface on which mobile robot 100 will typically travel during operation. For example, drive wheel 105 can include treads and/or be made from rubber or other material with a relatively high coefficient of friction on the operational surface.

The number and arrangement of drive wheel 105 and casters 130, 135 can vary in different implementations of mobile robot 100. For example, the illustrated implementation includes two front casters 130, two rear casters 135, and two drive wheels 105. In these implementations, each front caster 130 is positioned on one side of mobile robot 100 (i.e., to the left and right vis-à-vis the forward direction), each rear caster 135 is positioned on one side of mobile robot 100, and each drive wheel 105 is positioned on one side of mobile robot 100. For didactic purposes, only the casters 130, 135 and drive wheel 105 on the left side of mobile robot 100 are illustrated.

In other implementations, mobile robot 100 includes a single drive wheel 105. For example, such a drive wheel can be positioned between the left and right sides, toward the middle of mobile robot 100. Likewise, in some implementations, mobile robot 100 includes a single front caster 130 and/or a single rear caster 135. In other implementations, mobile robot 100 can include more than two casters 130, more than two casters 135, and/or more than two drive wheels 105. As another example, in other implementations, mobile robot 100 does not include a front caster or a rear caster.

More generally, in other implementations, mobile robot 100 can be supported on floor 10 by wheels, tracks, rollers or other components that both support a robot and allow it to move along the relevant surface(s). These other components can provide support in addition to casters 130, 135 or as substitutes for casters 130, 135.

Returning to the illustrated implementation, the arms of rear casters 135 are rotably coupled to chassis 115. Chassis 115 acts as a load bearing frame within mobile robot 100 and the arms of rear casters 135 can either be directly coupled to chassis 115 or indirectly coupled by one or more intermediate elements.

Mobile robot 100 also includes a pair of bogie arms 140 disposed towards the sides of mobile robot 100. The front caster 130 and drive wheel 105 on the left side of mobile robot 100 are rotably coupled to the bogie arm 140 that is disposed towards the left side of mobile robot 100. The front caster 130 and drive wheel 105 on the right side of mobile robot 100 are rotably coupled to the bogie arm 140 disposed towards the right. Each bogie arm 140 pivotably couples the respective drive wheel 105 and front caster 130 to chassis 115 at a pivot point 145. In more detail, the left bogie arm 140 can rotate, at least to some extent, in a plane that is parallel to the plane of the page about an axis that passes through pivot point 145. The right bogie arm 140 (not shown) can also rotate in a plane that is parallel to the plane of the page about an axis that passes through a right pivot point. The rotation of bogie arms 140 about these axes allows some degree of vertical motion of drive wheel 105 relative to the chassis. The rotation of bogie arms 140 is independent and increases the likelihood that front casters 130 or drive wheels 105 will remain in contact with floor 10. By way of example, if bogie arms 140 were not able to pivot about pivot points 145, then forward movement of mobile robot 100 from a flat floor 10 onto an upwardly-inclined ramp could elevate drive wheels 105 out of contact with floor 10. The rotational coupling between bogie arms 140 and chassis 115 at pivot points 145 can be implemented in a variety of different ways including, e.g., axles, roller bearings, and the like. The rotational coupling can be direct or mediated by one or more intermediate elements. As an aside, bogie arms 140 are generally not steerable, i.e., bogie arms 140 generally do rotate about a vertical axis that is in a plane that is parallel to the plane of the page.

In the illustrated implementation of mobile robot 100, each bogie arms 140 is coupled to payload deck 110 by a respective mechanical link 165. Link 165 mechanically couples the downwardly-directed force that results from forward inertia of a payload that is mounted on payload deck 110 during braking. One end of link 165 is coupled to bogie arm 140 and the other end is coupled to payload deck 110. The illustrated couplings are rotational and include a joint 170 between link 165 and bogie arm 140 and a joint 175 between link 165 and payload deck 110. Joints 170, 175 allow link 165 to rotate relative to bogie arm 140 and payload deck 110 about respective axes that extend perpendicularly into the plane of the page.

As discussed above, during braking of mobile robot 100 as it travels in the forward direction, the forward inertia of a payload that is mounted on payload deck 110 will apply a downwardly-directed force to payload deck 110. Link 165 couples this downwardly-directed force to drive wheel 105. In particular, the coupling of each link 165 to it respective bogie arm 140 is on the same forward or rearward side of pivot point 145 as the rotatable coupling between drive wheel 105 and bogie arm 140. In the absence of any resistance to rotation of bogie arm 140, the downwardly-directed force would rotate bogie arm 140 so as to lower drive wheel 105. In the presence of floor 10 or other surface that resists to rotation of bogie arm 140, the contact force between the resisting surface and drive wheel 105 is increased. Since the friction between the surface and drive wheel 105 increases as this contact force increases, braking performance is enhanced.

In some implementations, the amount of downwardly-directed force that is coupled to drive wheel 105 in a given mobile robot can be adapted to the operational context by changing the mechanical coupling of the downwardly-directed force to drive wheel 105. For example, one or both joints 170, 175 may be translatable forward and/or rearward along payload deck 110 or bogie 140. For example, in the illustrated implementation, forward translation of joint 170 along bogie 140 toward pivot point 145 would reduce the amount of downwardly-directed force that is coupled to drive wheel 105. The adaptation may be desirable, e.g., as the frictional or other characteristics of floor 10 or other surface change, the weight of the payload on payload deck 110 changes, the positioning of the payload on payload deck 110 changes, and/or the frictional or other characteristics of drive wheel 105 change. In some implementations, the adaptation may be automatic. For example, mobile robot 100 may include one or more sensors that sense, e.g., the weight and position of any payload on payload deck 110. The sensed information can be used to determine the desired adaptations.

The downwardly-directed force can be mechanically coupled to drive wheel 105 in a variety of ways. For example, mechanical link 165, can be implemented as a rod, a shaft, a beam, a geared member, or the like that has sufficient mechanical integrity to mechanically couple the downwardly-directed force from payload deck 110 to the appropriate side of bogie arm 140. As another example, mechanical link 165 can be implemented using a spring and/or damper that is stiff enough to mechanically couple the downwardly-directed force but provides some degree of shock absorption.

In still other implementations, the contact force between the resisting surface and drive wheel 105 can be increased without a bogie arm 140. For example, drive wheel 105 can be coupled to chassis 115 via a spring that allows some degree of vertical motion of drive wheel 105 relative to the chassis. The downwardly-directed force can be coupled to compress the spring and increase the contact force.

Returning to the illustrated implementation of mobile robot 100, coupling 120 between payload deck 110 and chassis 115 is implemented by a member 150 that extends upwardly from chassis 115 and couples to payload deck 110 at a joint 155. Payload deck 110 can thus rotate, at least to some extent, relative to chassis 115 about joint 155, i.e., about an axis that extends into the page in the illustrated orientation. The illustrated implementation of coupling 120 is in contact with both payload deck 110 and chassis 115. However, this is not necessarily the case and in other implementations, one or more intermediate elements can be positioned between coupling 120 and payload deck 110 and/or chassis 115.

Coupling 120 can be implemented in a number of different ways. For example, coupling 120 can be implemented as a hinge or a lever that has sufficient mechanical strength to support the payloads that are to be borne on payload deck 110. As another example, in other implementations, coupling 120 can be implemented without a joint 155. For example, provided that payload deck 110 has some degree of flexibility in view of the payloads that are to be borne and the separation distance between coupling 120 and link 165, coupling 120 need not be a rotatable coupling.

In the illustrated implementation, payload deck 110 is unsupported forward of drive wheel 105. Since a rigid support could act as a load bearing member and bear the downwardly-directed force from payload deck 110, this is generally the case. However, in other implementations, payload deck 110 can be supported forward of drive wheel 105, e.g., by a compliant member (e.g., a spring or damper) that can bear some, but not all, of the downwardly-directed force from payload deck 110. For example, at least 20% of the downwardly-directed force from payload deck 110 during braking as mobile robot 100 travels in the forward direction can be coupled to drive wheel 105.

In the illustrated implementation, payload deck 110 forms a cantilevered beam forward of joint 175 between link 165 and payload deck 110. This is not necessarily the case. For example, in other implementations, joint 175 may be at the end of payload deck 110. Such a positioning may be appropriate, e.g., in mobile robots 100 that do not include forward casters 130 or in mobile robots 100 where drive wheel 105 is at the front of mobile robot 100.

As discussed above, in some implementations, mobile robot 100 is an autonomous mobile robot. Autonomous mobile robots are mobile machines that can move to perform actions in accordance with programmed instructions. Autonomous mobile robots are autonomous in that they are capable of governing the performance of the programmed instructions independently. In other words, real-time control of operations by an external human or other operator is unnecessary for many work-day actions. These autonomous operations can include defined actions (e.g., manufacturing products, transporting goods and materials, moving carts, cleaning, surveillance, disinfection, etc.) as well as actions that are responsive to transient circumstances (e.g., identifying the position of movable obstacles and objects, including other of autonomous mobile robots, responding to alarms or safety conditions, and the like). The instructions are generally stored within the autonomous mobile robots themselves. However, in some implementations, instructions can be stored externally to the autonomous mobile robots and transmitted to the autonomous mobile robots as needed.

The instructions of an autonomous mobile robot 100 are generally implemented by a control unit that is included in the autonomous mobile robot 100. Such control units will generally include both hardware and software components that interoperate to control the performance of operations. The hardware components can include control circuitry, data processor(s), and data storage. Analog, digital, or both analog and digital processing can be performed. The stored information can include the instructions for performing operations as well as data relevant to the performance of those operations. Examples of relevant data can include, e.g., an electronic map for navigation, the shape of various workpieces, and definitions of safety zones and envelopes.

The program instructions that are performed by autonomous mobile robot 100 can reflect the improved braking performance during braking as the mobile robot 100 travels in the forward direction. For example, the operational parameters encompassed by permitted (or "safe") zones and envelopes can be enlarged and/or the operational range encompassed by excluded (or "unsafe") zones and envelopes can be decreased.

In general, both autonomous and non-autonomous mobile robots 100 will have features that reflect that movement in the forward direction is most likely during operation. For example, a mobile robot 100 will generally be able to travel faster in the forward direction than in the rearward direction. As another example, LIDAR or other sensors may have a larger range or a higher resolution in the forward direction than in the rearward direction. As yet another example, the steering or braking performance of a mobile robot may be better for travel in the forward direction than for travel in the rearward direction. Also, the program instructions that are performed by autonomous mobile robot 100 may reflect that movement in the forward direction is most likely in a number of different ways. For example, the instructions may cause an autonomous mobile robot 100 to beep or otherwise indicate that the mobile robot 100 is traveling in the rearward direction. Safety zones and envelopes may be defined differently for forward and rearward travel.

A number of implementations have been described. Nevertheless, it will be understood that various modifications may be made. Accordingly, other implementations are within the scope of the following claims.

## Claims

1. A mobile robot having a front, a rear, a left side, and a right side, the mobile robot comprising:
a chassis (115);
a drive wheel (105) coupled to the chassis by a coupling that allows at least some vertical motion of the drive wheel (105) relative to the chassis (115);
a payload deck (110) disposed over the chassis and coupled to the chassis by a coupling (120);
a mechanical link (165) that links the payload deck (110) to the coupling of the drive wheel (105) to the chassis (115), wherein the coupling (120) between the payload deck (110) and the chassis is rearward of the mechanical link (165); and
a control unit configured to control performance of at least some operations by the mobile robot in accordance with instructions for performing operations as well as data relevant to the performance of those operations, wherein parameters defined in the instructions or data reflect direction of a downwardly-directed force by the mechanical link (165) to the drive wheel (105) during braking when the mobile robot is traveling in a forward direction.

2. The mobile robot of claim 1, wherein:
the drive wheel (105) is coupled to the chassis by a bogie arm (140) that is rotatable about a pivot point (145) coupled to the chassis (115);
the mechanical link (165) links the payload deck (110) to the bogie arm (140); and
the drive wheel (105) is rotably coupled to the bogie arm (140) and rotation of the bogie arm (140) about the pivot point provides the vertical motion of the drive wheel (105) relative to the chassis.

3. The mobile robot of claim 2, wherein the mechanical link (165) is coupled to the bogie arm (140) at a joint (170) that is disposed on a same side of the pivot point (145) as the rotable coupling between the drive wheel (105) and the bogie arm (140).

4. The mobile robot of claim 2 or 3, wherein the drive wheel (105) is rotably coupled to the bogie arm (140) rearward of the pivot point (145).

5. The mobile robot of any preceding claim, wherein the coupling (120) between the payload deck (110) and the chassis (115) is a rotatable coupling, for example, a joint.

6. The mobile robot of any preceding claim, wherein the mobile robot includes:
a forward support (130) configured to contact a surface during operational movement of the mobile robot; and
a rearward support (135) configured to contact the surface during operational movement of the mobile robot,
wherein the drive wheel (105) is disposed rearward of the forward support and forward of the rearward support, and
optionally wherein the forward support is a front caster and the rearward support is a rear caster.

7. The mobile robot of any preceding claim, wherein the mobile robot includes two drive wheels (105) and one of the drive wheels (105) is disposed toward the right side of the mobile robot and another of the drive wheels (105) is disposed toward the left side of the mobile robot.

8. A mobile robot having a front, a rear, a left side, and a right side, the mobile robot comprising:
a chassis (115) that is coupled to a forward support (130), a drive wheel (105), and a rearward support (135), wherein the drive wheel (105) is disposed rearward of the forward support (130) and forward of the rearward support (135) and wherein the drive wheel (105) and the forward and rearward supports (130, 135) are configured to bear a load arising from the weight of mobile robot (100) and a payload borne by the mobile robot (100);
a payload platform (110) configured to receive a payload borne by the mobile robot (100);
a mechanical link (165) arranged to preferentially direct a downwardly-directed force that arises from inertia of the payload during braking when the mobile robot is moving in the forward direction from the payload platform (110) to the drive wheel (105) rather than the forward and rearward supports (130, 135); and
a control unit configured to control performance of at least some operations by the mobile robot in accordance with instructions for performing operations as well as data relevant to the performance of those operations, wherein parameters defined in the instructions or data reflect the preferential direction of the downwardly-directed force to the drive wheel.

9. The mobile robot of claim 8, wherein:
the payload platform (110) is a payload deck (110) that is disposed over the chassis and coupled to the chassis by a coupling (120) that permits rotational movement of the payload deck (110), wherein the coupling (120) is rearward of the drive wheel (105).

10. The mobile robot of any one of claims 8 to 9, wherein the drive wheel (105) is coupled to the chassis by a coupling that allows at least some vertical motion of the drive wheel (105) relative to the chassis (115).

11. The mobile robot of claim 10, wherein the drive wheel (105) is coupled to the chassis by a bogie arm (140) that is rotatable about a pivot point (145) coupled to the chassis (115), wherein the drive wheel (105) is rotably coupled to the bogie arm (140) and rotation of the bogie arm (140) about the pivot point provides vertical motion of the drive wheel (105) relative to the chassis.

12. The mobile robot of claim 11, wherein the mechanical link (165) links the payload deck (110) to the bogie arm (140), and wherein the mechanical link (165) is coupled to the bogie arm (140) at a joint (170) that is disposed on a same side of the pivot point (145) as the rotable coupling between the drive wheel (105) and the bogie arm (140).

13. The mobile robot of any one of claims 8 to 12, wherein the forward support is a front caster and the rearward support is a rear caster.

14. The mobile robot of any one of claims 8 to 13, wherein the mobile robot includes two drive wheels (105) and one of the drive wheels (105) is disposed toward the right side of the mobile robot and another of the drive wheels (105) is disposed toward the left side of the mobile robot.

15. The mobile robot of any one of claims 8 to 14, wherein the mobile robot (100) is autonomous.

## Patentansprüche

1. Mobiler Roboter mit einer Vorderseite, einer Rückseite, einer linken Seite und einer rechten Seite, wobei der mobile Roboter Folgendes umfasst:
ein Chassis (115);
ein Antriebsrad (105), das mit dem Chassis durch eine Kopplung gekoppelt ist, die zumindest eine gewisse vertikale Bewegung des Antriebsrads (105) relativ zu dem Chassis (115) ermöglicht;
ein Nutzlastdeck (110), das über dem Chassis angeordnet und durch eine Kopplung (120) mit dem Chassis gekoppelt ist;
eine mechanische Verbindung (165), die das Nutzlastdeck (110) mit der Kopplung des Antriebsrads (105) mit dem Chassis (115) verbindet, wobei sich die Kopplung (120) zwischen dem Nutzlastdeck (110) und dem Chassis hinter der mechanischen Verbindung (165) befindet; und
eine Steuereinheit, die dazu ausgelegt ist, eine Durchführung zumindest einiger Operationen durch den mobilen Roboter gemäß Anweisungen zum Durchführen von Operationen sowie für die Durchführung der Operationen relevanten Daten zu steuern, wobei Parameter, die in den Anweisungen oder Daten definiert sind, eine Richtung einer nach unten gerichteten Kraft durch die mechanische Verbindung (165) auf das Antriebsrad (105) während eines Bremsens bei Bewegung des mobilen Roboters in einer Vorwärtsrichtung widerspiegeln.

2. Mobiler Roboter nach Anspruch 1, wobei:
das Antriebsrad (105) durch einen Fahrgestellarm (140) mit dem Chassis gekoppelt ist, der um einen Drehpunkt (145) drehbar ist, der mit dem Chassis (115) gekoppelt ist;
die mechanische Verbindung (165) das Nutzlastdeck (110) mit dem Fahrgestellarm (140) verbindet; und
das Antriebsrad (105) drehbar mit dem Fahrgestellarm (140) gekoppelt ist und eine Drehung des Fahrgestellarms (140) um den Drehpunkt die vertikale Bewegung des Antriebsrades (105) relativ zu dem Fahrgestell bereitstellt.

3. Mobiler Roboter nach Anspruch 2, wobei die mechanische Verbindung (165) mit dem Fahrgestellarm (140) an einem Gelenk (170) gekoppelt ist, das auf einer gleichen Seite des Drehpunkts (145) wie die drehbare Kopplung zwischen dem Antriebsrad (105) und dem Fahrgestellarm (140) angeordnet ist.

4. Mobiler Roboter nach Anspruch 2 oder 3, wobei das Antriebsrad (105) hinter dem Drehpunkt (145) drehbar mit dem Fahrgestellarm (140) gekoppelt ist.

5. Mobiler Roboter nach einem der vorhergehenden Ansprüche, wobei die Kopplung (120) zwischen dem Nutzlastdeck (110) und dem Chassis (115) eine drehbare Kopplung, zum Beispiel ein Gelenk, ist.

6. Mobiler Roboter nach einem der vorhergehenden Ansprüche, wobei der mobile Roboter Folgendes umfasst:
eine vordere Stütze (130), die dazu ausgelegt ist, während einer Betriebsbewegung des mobilen Roboters eine Oberfläche zu kontaktieren; und
eine hintere Stütze (135), die dazu ausgelegt ist, während einer Betriebsbewegung des mobilen Roboters die Oberfläche zu kontaktieren,
wobei das Antriebsrad (105) hinter der vorderen Stütze und vor der hinteren Stütze angeordnet ist, und
wobei optional die vordere Stütze eine vordere Laufrolle ist und die hintere Stütze eine hintere Laufrolle ist.

7. Mobiler Roboter nach einem der vorhergehenden Ansprüche, wobei der mobile Roboter zwei Antriebsräder (105) umfasst und eines der Antriebsräder (105) zur rechten Seite des mobilen Roboters hin angeordnet ist und ein anderes der Antriebsräder (105) zur linken Seite des mobilen Roboters hin angeordnet ist.

8. Mobiler Roboter mit einer Vorderseite, einer Rückseite, einer linken Seite und einer rechten Seite, wobei der mobile Roboter Folgendes umfasst:
ein Chassis (115), das mit einer vorderen Stütze (130), einem Antriebsrad (105) und einer hinteren Stütze (135) gekoppelt ist, wobei das Antriebsrad (105) hinter der vorderen Stütze (130) und vor der hinteren Stütze (135) angeordnet ist und wobei das Antriebsrad (105) und die vordere und die hintere Stütze (130, 135) dazu ausgelegt sind, eine Last zu tragen, die aus dem Gewicht des mobilen Roboters (100) und einer von dem mobilen Roboter (100) getragenen Nutzlast entsteht;
eine Nutzlastplattform (110), die dazu ausgelegt ist, eine von dem mobilen Roboter (100) getragene Nutzlast aufzunehmen;
eine mechanische Verbindung (165), die dazu angeordnet ist, eine nach unten gerichtete Kraft, die aus einer Trägheit der Nutzlast während eines Bremsens bei Bewegung des mobilen Roboters in einer Vorwärtsrichtung entsteht, bevorzugt von der Nutzlastplattform (110) auf das Antriebsrad (105) anstatt die vordere und hintere Stütze (130, 135) zu lenken; und
eine Steuereinheit, die dazu ausgelegt ist, eine Durchführung zumindest einiger Operationen durch den mobilen Roboter gemäß Anweisungen zum Durchführen von Operationen sowie für die Durchführung dieser Operationen relevanten Daten zu steuern, wobei Parameter, die in den Anweisungen oder Daten definiert sind, die bevorzugte Richtung der nach unten gerichteten Kraft auf das Antriebsrad widerspiegeln.

9. Mobiler Roboter nach Anspruch 8, wobei:
die Nutzlastplattform (110) ein Nutzlastdeck (110) ist, das über dem Chassis angeordnet und mit dem Chassis durch eine Kopplung (120) gekoppelt ist, die eine Drehbewegung des Nutzlastdecks (110) ermöglicht, wobei sich die Kopplung (120) hinter dem Antriebsrad (105) befindet.

10. Mobiler Roboter nach einem der Ansprüche 8 bis 9, wobei das Antriebsrad (105) mit dem Chassis durch eine Kopplung gekoppelt ist, die zumindest eine gewisse vertikale Bewegung des Antriebsrads (105) relativ zu dem Chassis (115) ermöglicht.

11. Mobiler Roboter nach Anspruch 10, wobei das Antriebsrad (105) mit dem Chassis durch einen Fahrgestellarm (140) gekoppelt ist, der um einen Drehpunkt (145) drehbar ist, der mit dem Chassis (115) gekoppelt ist, wobei das Antriebsrad (105) drehbar mit dem Fahrgestellarm (140) gekoppelt ist und eine Drehung des Fahrgestellarms (140) um den Drehpunkt eine vertikale Bewegung des Antriebsrads (105) relativ zu dem Chassis bereitstellt.

12. Mobiler Roboter nach Anspruch 11, wobei die mechanische Verbindung (165) das Nutzlastdeck (110) mit dem Fahrgestellarm (140) verbindet, und wobei die mechanische Verbindung (165) mit dem Fahrgestellarm (140) an einem Gelenk (170) gekoppelt ist, das auf einer gleichen Seite des Drehpunkts (145) wie die drehbare Kopplung zwischen dem Antriebsrad (105) und dem Fahrgestellarm (140) angeordnet ist.

13. Mobiler Roboter nach einem der Ansprüche 8 bis 12, wobei die vordere Stütze eine vordere Laufrolle ist und die hintere Stütze eine hintere Laufrolle ist.

14. Mobiler Roboter nach einem der Ansprüche 8 bis 13, wobei der mobile Roboter zwei Antriebsräder (105) umfasst und eines der Antriebsräder (105) zur rechten Seite des mobilen Roboters hin angeordnet ist und ein anderes der Antriebsräder (105) zur linken Seite des mobilen Roboters hin angeordnet ist.

15. Mobiler Roboter nach einem der Ansprüche 8 bis 14, wobei der mobile Roboter (100) autonom ist.

## Revendications

1. Robot mobile ayant un avant, un arrière, un côté gauche et un côté droit, le robot mobile comprenant :
un châssis (115) ;
une roue motrice (105) accouplée au châssis par un accouplement permettant au moins un certain mouvement vertical de la roue motrice (105) par rapport au châssis (115) ;
une plate-forme (110) pour charge utile disposée au-dessus du châssis et accouplée au châssis par un accouplement (120) ;
une liaison mécanique (165) qui relie la plate-forme (110) pour charge utile à l'accouplement de la roue motrice (105) au châssis (115), l'accouplement (120) entre la plate-forme (110) pour charge utile et le châssis étant situé en arrière de la liaison mécanique (165) ; et
une unité de commande configurée pour commander l'exécution d'au moins certaines opérations effectuées par le robot mobile conformément à des instructions pour effectuer des opérations ainsi qu'à des données pertinentes pour l'exécution de ces opérations, les paramètres définis dans les instructions ou les données reflétant la direction d'une force dirigée vers le bas par la liaison mécanique (165) vers la roue motrice (105) pendant le freinage lorsque le robot mobile se déplace vers l'avant.

2. Robot mobile selon la revendication 1, dans lequel :
la roue motrice (105) est accouplée au châssis par un bras (140) de bogie qui peut tourner autour d'un point (145) de pivotement accouplé au châssis (115) ;
la liaison mécanique (165) relie la plate-forme (110) pour charge utile au bras (140) de bogie ; et
la roue motrice (105) est couplée de manière rotative au bras (140) de bogie et la rotation du bras (140) de bogie autour du point de pivotement produit le mouvement vertical de la roue motrice (105) par rapport au châssis.

3. Robot mobile selon la revendication 2, la liaison mécanique (165) étant couplée au bras (140) de bogie au niveau d'une articulation (170) qui est disposée d'un même côté du point (145) de pivotement que l'accouplement rotatif entre la roue motrice (105) et le bras (140) de bogie.

4. Robot mobile selon la revendication 2 ou 3, la roue motrice (105) étant couplée de manière rotative au bras (140) de bogie en arrière du point (145) de pivotement.

5. Robot mobile selon l'une quelconque des revendications précédentes, l'accouplement (120) entre la plate-forme (110) pour charge utile et le châssis (115) étant un accouplement rotatif, par exemple un joint.

6. Robot mobile selon l'une quelconque des revendications précédentes, le robot mobile comprenant :
un support avant (130) configuré pour entrer en contact avec une surface pendant le mouvement opérationnel du robot mobile ; et
un support arrière (135) configuré pour entrer en contact avec la surface lors du mouvement opérationnel du robot mobile,
la roue motrice (105) étant disposée à l'arrière du support avant et à l'avant du support arrière, et
facultativement, le support avant étant une roulette avant et le support arrière étant une roulette arrière.

7. Robot mobile selon l'une quelconque des revendications précédentes, le robot mobile comprenant deux roues motrices (105) et l'une des roues motrices (105) étant disposée vers le côté droit du robot mobile et l'autre des roues motrices (105) étant disposée vers le côté gauche du robot mobile.

8. Robot mobile ayant un avant, un arrière, un côté gauche et un côté droit, le robot mobile comprenant :
un châssis (115) accouplé à un support avant (130), une roue motrice (105), et un support arrière (135), la roue motrice (105) étant disposée en arrière du support avant (130) et en avant du support arrière (135) et la roue motrice (105) et les supports avant et arrière (130, 135) étant configurés pour supporter une charge résultant du poids du robot mobile (100) et d'une charge utile portée par le robot mobile (100) ; une plate-forme (110) pour charge utile configurée pour recevoir une charge utile portée par le robot mobile (100) ;
une liaison mécanique (165) conçue pour diriger de préférence une force dirigée vers le bas qui provient de l'inertie de la charge utile pendant le freinage lorsque le robot mobile se déplace vers l'avant depuis la plate-forme (110) pour charge utile vers la roue motrice (105) plutôt que vers les supports avant et arrière (130, 135) ; et
une unité de commande configurée pour commander l'exécution d'au moins certaines opérations effectuées par le robot mobile conformément à des instructions pour effectuer des opérations ainsi qu'à des données pertinentes pour l'exécution de ces opérations, les paramètres définis dans les instructions ou les données reflétant la direction préférentielle de la force dirigée vers le bas vers la roue motrice.

9. Robot mobile selon la revendication 8, dans lequel :
la plate-forme (110) pour charge utile est une plate-forme (110) pour charge utile disposée sur le châssis et couplée au châssis par un accouplement (120) qui permet un mouvement de rotation de la plate-forme (110) pour charge utile, l'accouplement (120) se trouvant en arrière de la roue motrice (105).

10. Robot mobile selon l'une quelconque des revendications 8 à 9, la roue motrice (105) étant couplée au châssis par un accouplement qui permet au moins un certain mouvement vertical de la roue motrice (105) par rapport au châssis (115).

11. Robot mobile selon la revendication 10, la roue motrice (105) étant couplée au châssis par un bras (140) de bogie qui peut tourner autour d'un point (145) de pivotement couplé au châssis (115), la roue motrice (105) étant couplée de manière rotative au bras (140) de bogie et la rotation du bras (140) de bogie autour du point de pivotement produisant un mouvement vertical de la roue motrice (105) par rapport au châssis.

12. Robot mobile selon la revendication 11, la liaison mécanique (165) reliant la plate-forme (110) pour charge utile au bras (140) de bogie, et la liaison mécanique (165) étant couplée au bras (140) de bogie au niveau d'une articulation (170) qui est disposée d'un même côté du point (145) de pivotement que l'accouplement rotatif entre la roue motrice (105) et le bras (140) de bogie.

13. Robot mobile selon l'une quelconque des revendications 8 à 12, dans lequel le support avant étant une roulette avant et le support arrière étant une roulette arrière.

14. Robot mobile selon l'une quelconque des revendications 8 à 13, le robot mobile comprenant deux roues motrices (105) et l'une des roues motrices (105) étant disposée vers le côté droit du robot mobile et l'autre des roues motrices (105) étant disposée vers le côté gauche du robot mobile.

15. Robot mobile selon l'une quelconque des revendications 8 à 14, le robot mobile (100) étant autonome.
